# EUROPÄISCHE PATENTANMELDUNG

(11) **EP 2 735 700 A2**
(43) Veröffentlichungstag der Anmeldung: **28.05.2014**
(21) Anmeldenummer: 13193335.0
(22) Anmeldetag: 18.11.2013
(51) Int. Cl.: F01C 1/22, F01C 21/10

(54) **Trochoidförmiges Gehäuse für einen Rotationskolbenmotoren und generatives Schichtfertigungsverfahren**

(30) Priorität: 27.11.2012 DE 102012023090
(71) Anmelder: EADS Deutschland GmbH, 85521 Ottobrunn (DE); Wankel Supertec GmbH, 03044 Cottbus (DE)
(72) Erfinder: Steinwandel, Jürgen, Dr., 88690 Uhldingen-Mühlhofen (DE); Palm, Frank, 82008 Unterhaching (DE); Brandl, Erhard, Dr., 85117 Eitensheim (DE); Sigmund, Ernst, Prof. Dr., 03046 Cottbus (DE)
(74) Vertreter: Maiwald Patentanwalts GmbH

(57) **Zusammenfassung**

Trochoide (1), sowie ihr Herstellungsverfahren, für einen Rotationskolbenmotor (3), insbesondere für den Einsatz in Luftfahrzeugen. Die Trochoide (1) ist dabei ausgeführt, zusammen mit einem Läufer (5), Arbeitsräume (7) zum Komprimieren und Zünden eines Brennstoffs bereitzustellen. Des Weiteren weist die Trochoide (1) eine Leichtmetalllegierung (9) auf und ist mittels eines generativen Schichtfertigungsverfahrens gefertigt.

## Beschreibung

### GEBIET DER ERFINDUNG

Die vorliegende Erfindung betrifft eine Trochoide für einen Rotationskolbenmotor und einen entsprechenden Rotationskolbenmotor. Ferner betrifft die vorliegende Erfindung ein Verfahren zum Herstellen der Trochoiden, sowie ein Luftfahrzeug mit einem entsprechenden Rotationskolbenmotor.

### TECHNISCHER HINTERGRUND

Rotationskolbenmotoren weisen eine Trochoide und einen in der Trochoide drehbar gelagerten Läufer auf. Dabei werden zwischen der Innenseite der Trochoide und dem Läufer Arbeitsräume gebildet, in denen ein Brennstoff durch Drehung des Läufers komprimiert und verbrannt wird.

Bei der Verwendung von Rotationskolbenmotoren in der Luftfahrt kann es schwierig sein, einen Kompromiss zwischen einer leichten Bauweise und einer effizienten Arbeitsweise des Rotationskolbenmotors zu finden. Beispielsweise sind Gussverfahren bekannt (z.B. Sandguss, Kokillenguss), bei denen homogen schmelzende Metalllegierungen geschmolzen und in Trochoidenform gegossen werden. Diese sind jedoch entweder relativ schwer oder verschleißen zu schnell. Ferner kann die Werkstoffbelastbarkeit von mit Hilfe des Gießverfahrens hergestellten Trochoiden begrenzt sein.

### ZUSAMMENFASSUNG DER ERFINDUNG

Es kann daher ein Bedarf daran bestehen, eine Möglichkeit bereitzustellen, einen Rotationskolbenmotor gewichtssparend und gleichzeitig effizient auszuführen.

Dieser Bedarf kann durch den Gegenstand der vorliegenden Erfindung gemäß den unabhängigen Ansprüchen gedeckt werden. Vorteilhafte Ausführungsformen der vorliegenden Erfindung sind in den abhängigen Ansprüchen beschrieben.

Im Folgenden werden Merkmale, Einzelheiten und mögliche Vorteile einer Vorrichtung gemäß Ausführungsformen der Erfindung im Detail diskutiert.

Im Folgenden ist mit Elastizitätsmodul ein Werkstoffkennwert gemeint. Steifigkeit ist eine Bauteileigenschaft, die sowohl den Elastizitätsmodul als auch die ausgebildete Struktur umfasst.

Gemäß einem ersten Aspekt der Erfindung wird eine Trochoide für einen Rotationskolbenmotor vorgestellt. Die Trochoide ist ausgeführt, zusammen mit einem Läufer Arbeitsräume zum Komprimieren und Zünden eines Brennstoffs bereitzustellen. Dabei weist die Trochoide eine Leichtmetalllegierung auf und ist mittels eines generativen Schichtfertigungsverfahrens, insbesondere ein Schichtfertigungsverfahren gemäß VDI-Richtlinie 3404, gefertigt.

Anders ausgedrückt basiert die Idee der vorliegenden Erfindung darauf, die Trochoide eines Rotationskolbenmotors für ein Luftfahrzeug mit Hilfe von generativen Schichtfertigungsverfahren herzustellen. Diese Verfahren ermöglichen dabei eine Verwendung von pulvermetallurgischen Leichtmetallwerkstoffen mit Zulegierungen. Im Gegensatz dazu können mit Hilfe von Gußverfahren lediglich homogen schmelzende Legierungen verwendet werden. Durch den Einsatz von Leichtmetalllegierungen mit Zulegierungen im generativen Verfahren kann die Trochoide vergleichsweise sehr leicht und sehr steif ausgeführt sein. Das heißt, die Trochoide kann durch das generative Verfahren zum Beispiel mit einem signifikant höheren Werkstoff-Elastizitätsmodul als beim Gußverfahren hergestellt werden.

Die Verwendung von Leichtmetalllegierungen ermöglicht Gewichtseinsparungen, was insbesondere beim Einsatz der Trochoiden in einem Rotationskolbenmotor für die Luftfahrt vorteilhaft sein kann. Durch die Gewichtseinsparungen kann ferner Brennstoff eingespart werden.

Des Weiteren lässt die mit einer hohen Bauteilsteifigkeit ausgeführte Trochoide höhere Werkstoffbelastungen und damit höhere Verdichtungs- und Verbrennungsdrücke im Rotationskolbenmotor zu. Auf diese Weise kann damit der Wirkungsgrad des Rotationskolbenmotors erhöht bzw. der spezifische Verbrauch gesenkt werden. Ferner ist es durch die höheren Kompressionsdrücke möglich, in Verbindung mit hohen Einspritzdrücken, eine Selbstzündung von Diesel oder Kerosin im Rotationskolbenmotor zu realisieren. Somit kann in diesem Fall auf die in der Regel notwendige Gas-Brennstoff-Gemisch-Zündung durch einen Funken verzichtet werden. Die erfindungsgemäße Trochoide und der Rotationskolbenmotor, in dem die Trochoide eingesetzt ist, können in unterschiedlichen Bereichen der Technik verwendet werden. Beispielsweise können die Trochoide und der Rotationskolbenmotor auch im Fahrzeugbau verwendet werden. Vorzugsweise können die Trochoide und der Rotationskolbenmotor in einer Vielzahl von Luftfahrzeugen, wie zum Beispiel Passagier- und Transportflugzeugen und Hubschraubern eingesetzt werden. Insbesondere können die Trochoide und der Rotationskolbenmotor für den Antrieb von Flugzeugen, insbesondere von unbemannten Luftfahrzeugen, auch Drohne oder Unmanned Aerial Vehicles (UAVs) genannt, oder als Ersatzturbinen, auch Hilfsgetriebe oder Auxiliary Power Unit (APU) genannt, verwendet werden.

Die Trochoide kann als oval-bogige Hüllfigur ausgeführt sein. Dabei bildet die Trochoide zusammen mit einem Läufer Arbeitsräume in einem Rotationskolbenmotor. In den Arbeitsräumen finden zum Beispiel eine Kompression und eine Zündung eines Brennstoffs statt. Der Brennstoff kann dabei zum Beispiel Kerosin oder Diesel sein. Die Trochoide ist ausgeführt, Verbrennungsdrücken von bis zu 200 bar standzuhalten.

Ferner ist die Trochoide ausgeführt, in einem Rotationskolbenmotor verwendet zu werden. Der Rotationskolbenmotor kann zum Beispiel ein Kreiskolbenmotor (KKM) oder ein Drehkolbenmotor (DKM) sein.

Die Trochoide wird mittels des generativen Verfahrens hergestellt. Dass heißt, die Leichtmetalllegierung mit Zulegierungen wird durch das generative Verfahren urgeformt.

Das generative Verfahren, das zur Herstellung der Trochoide verwendet wird kann auch als Schichtfertigungsverfahren bzw. in Englisch als "aditive layer manufacturing"-Verfahren (ALM-Verfahren) bezeichnet werden. Ferner kann das generative Verfahren als "three-dimensional printing" bezeichnet werden. Insbesondere kann das generative Verfahren ein Schichtfertigungsverfahren gemäß der Richtlinie 3404 des Vereins Deutscher Ingenieure (VDI-Richtlinie) sein. Das generative Verfahren kann dabei Elemente eines selektiven Nahtschweißens aufweisen. Ferner kann das generative Verfahren Laser-gestützt, Elektronenstrahl-gestützt oder Lichtbogen-gestützt sein. Weitere Details und Schritte des Verfahrens werden weiter unten beschrieben.

Gemäß einem Ausführungsbeispiel der Erfindung ist die Leichtmetalllegierung eine Aluminiumlegierung oder eine Titanlegierung. Anders ausgedrückt wird Aluminium- oder Titan-Pulver als Basismaterial bzw. Basiswerkstoff bei der Herstellung der Trochoiden verwendet.

Bei Verwendung von Titan- und Aluminiumlegierungen kann die Steifigkeit der Trochoide besonders effizient mittels des generativen Verfahrens erhöht werden. Gleichzeitig sind diese Materialien gut geeignet, um eine hohe Wärmeleitfähigkeit der Trochoide zu gewährleisten. Die hohe Wärmeleitfähigkeit der Trochoide ermöglicht eine effiziente Kühlung des Rotationskolbenmotors.

Gemäß einem weiteren Ausführungsbeispiel der Erfindung weist die Leichtmetalllegierung mindestens eine Zulegierung, das heißt einen Zusatzwerkstoff auf. Die Zulegierung erhöht dabei ein Elastizitätsmodul (MPa bzw. N/mm²) der Leichtmetalllegierung. Anders ausgedrückt ist das Elastizitätsmodul einer Trochoide mit Zulegierung höher als bei einer Trochoide ohne Zulegierung. Die Zulegierung kann dabei aus der folgenden Gruppe von Zulegierungen ausgewählt sein: Eisen (Fe), Cobalt (Co), Nickel (Ni), Vanadium (V), Mangan (Mn), Niob (Nb), Titan (Ti), Zirkon (Zr), Hafnium (Hf), Tantal (Ta), Bor (B), die Gruppe der Lanthanoiden (seltene Erden), insbesondere Scandium (Sc) oder Yttrium (Y), und/oder Silizium (Si). Ferner können weitere Materialien als Zulegierungen in die Trochoide integriert werden. Insbesondere können auch Zulegierungen verwendet werden, die eine relativ gute Löslichkeit in Aluminium und/oder Titan aufweisen. Dabei können auch mehrere unterschiedliche Zulegierungen in der Trochoide enthalten sein.

Gemäß einem weiteren Ausführungsbeispiel der Erfindung ist die Leichtmetalllegierung eine Aluminium-Eisen-Mangan-Legierung. Diese Kombination von Basismaterial und Zulegierungen führt bei relativ geringen Kosten zu einer signifikanten Erhöhung des Elastizitätsmoduls der Trochoide.

Gemäß einem weiteren Ausführungsbeispiel der Erfindung weist die Leichtmetalllegierung zwischen 1,5 und 10 Gewichtsprozent (Gew.-%) Eisen auf. Vorzugsweise weist die Leichtmetalllegierung zwischen 3 und 5 Gew.-% Eisen auf. Ferner weist die Leichtmetalllegierung zwischen 0,5 und 2 Gew.-% Mangan auf. Vorzugsweise weist die Leichtmetalllegierung zwischen 1,5 und 2 Gew.-% Mangan auf. Des Weiteren weist die Leichtmetalllegierung zwischen 88 und 98 Gew.-% Aluminium auf. Die Angaben der Gew.-% beziehen sich dabei auf einen Reinheitsgrad mit einer Gesamtverunreinigung von maximal 0,5 Gew.-%. Verunreinigungen können dabei zum Beispiel Silizium- oder Kupfer oder auch andere Zulegierungselemente sein, welche durch die Verwendung von recycliertem Aluminium, d.h. Aluminium, das aus Aluminiumabfällen gewonnen wird, als Ausgangswerkstoff vorkommen können.

Gemäß einem zweiten Aspekt der Erfindung wird ein Rotationskolbenmotor für Luftfahrzeuge vorgestellt. Der Rotationskolbenmotor weist eine oben beschriebene Trochoide und einen Läufer auf. Der Läufer ist dabei drehbar in der Trochoide gelagert. Dabei kann der Läufer zum Beispiel mit drei Kanten ausgeführt sein. Die Trochoide kann ferner eine Einlassöffnung bzw. einen Einlassschlitz zum Einlassen eines Gas- bzw. Luft-Kraftstoff-Gemisches aufweisen. Ferner kann die Trochoide eine Auslassöffnung bzw. einen Auslassschlitz zum Auslassen der Verbrennungsgase aufweisen. Des Weiteren kann der Rotationskolbenmotor eine bzw. mehrere Zündkerzen aufweisen, die durch eine Wand der Trochoide mit dem Arbeitsraum im Inneren der Trochoide verbunden sind.

Der Rotationskolbenmotor ist zum Beispiel als Kreiskolbenmotor oder Drehkolbenmotor ausgeführt. Der Rotationskolbenmotor ist dabei eine Brennkraftmaschine, bei der die Komponenten die Arbeit verrichten im Gegensatz zum Hubkolbenmotor, lediglich Drehbewegungen ausführen.

Insbesondere kann der Rotationskolbenmotor nach dem Viertaktprinzip arbeiten. In einem ersten Arbeitstakt kann der Läufer mit einer seiner Kanten an der Einlassöffnung vorbeilaufen. Durch Vergrößerung des Volumens des Arbeitsraums auf Grund der bogigen Form der Trochoide wird hierdurch das Gas-Brennstoff-Gemisch durch die Einlassöffnung in den Arbeitsraum gesaugt.

Bei einer Weiterdrehung des Läufers in einem zweiten Arbeitstakt wird der zwischen der Trochoide und dem Läufer eingeschlossene Arbeitsraum kleiner, so dass das Gas-Brennstoff-Gemisch verdichtet und dabei ggf. erwärmt wird.

In einem dritten Arbeitstakt erreicht das Gas-Brennstoff-Gemisch seine höchste Dichte und wird beim Passieren einer Zündkerze gezündet. Die bei der Verbrennung freiwerdende Wärme führt zu einer Druckerhöhung, die von dem Rotationskolbenmotor in Arbeit umgesetzt wird. Insbesondere wird der Läufer in einem vierten Arbeitstakt durch die Druckerhöhung gedreht und die Verbrennungsgase werden durch eine Auslassöffnung gedrückt.

Wie oben beschrieben, kann dank der erfindungsgemäßen Trochoide auf Zündkerzen verzichtet werden, da das Gas-Brennstoff-Gemisch bis zur Selbstzündung komprimiert werden kann.

Gemäß einem dritten Aspekt der Erfindung wird ein Luftfahrzeug vorgestellt. Das Luftfahrzeug weist dabei einen oben beschriebenen Rotationskolbenmotor auf. Beispielsweise kann das Luftfahrzeug ein Flugzeug oder ein Hubschrauber sein.

Gemäß einem vierten Aspekt der Erfindung wird ein Verfahren zum Herstellen einer oben beschrieben Trochoide vorgestellt. Das Verfahren weist die folgenden Schritte auf: Bereitstellen einer Schicht eines Leichtmetallpulvers; Schmelzen des Leichtmetallpulvers mittels einer Wärmequelle entsprechend einer Trochoid-Geometrie; Erstarren des Leichtmetallpulvers; Wiederholen der oben genannten Schritte für mehrere Schichten bis ein Trochoid-Rohbauteil fertiggestellt ist.

Das Verfahren zum Herstellen der Trochoide ist dabei ein generatives Verfahren. Insbesondere kann das Verfahren zum Beispiel "selective laser melting" (SLM) sein.

Dabei wird eine dünne Schicht des Leichtmetallpulvers von beispielsweise ca. 50 bis 70 µm Dicke auf einer X-Y-Platte aufgetragen. Eine Wärmequelle erhitzt und schmilzt das Leichtmetallpulver entsprechend einer Geometrie der herzustellenden Trochoide. Insbesondere kann der Laser dabei gemäß einem entsprechenden Querschnitt der Trochoide mit Hilfe einer CAD-Datei angesteuert werden.

Das Leichtmetallpulver kann dabei wie oben beschrieben unterschiedliche Komponenten bzw. Leichtmetalllegierungen aufweisen. Insbesondere kann das Leichtmetallpulver Aluminium oder Titan als Basiswerkstoff aufweisen. Ferner kann das Leichtmetallpulver Zulegierungen aufweisen, die eine relativ gute Löslichkeit in Aluminium und/oder Titan aufweisen. Beispielsweise kann die Schmelztemperatur der Zulegierungen nahe der Schmelztemperatur des Basiswerkstoffs sein. Vorzugsweise weist das Leichtmetallpulver eine Mischung aus Aluminium Eisen und Mangan auf.

Sind die gewünschten Stellen der Schicht auf der X-Y-Platte aufgeschmolzen wird das Material abgekühlt und erstarrt. Das nichtgeschmolzene Pulver kann dabei die Trochoidstruktur stützen. Die Abkühlung bzw. das Erstarren des geschmolzenen Leichtmetallpulvers findet auf Grund der geringen Schichtdicke sehr schnell statt. Das heißt, die Leichtmetalllegierung erstarrt wesentlich schneller als zum Beispiel beim Gußverfahren. Durch das schnelle Erstarren entsteht eine stabile mit Zulegierungen übersättigte Werkstoffstruktur ohne grobe Phasen. Im Gegensatz hierzu können die Zulegierungen bei Gußverfahren zum Beispiel als Eisenaluminide (Al₃Fe) vorzeitig auskristallisieren, weil die Abkühlung langsamer stattfindet.

Nach dem Erstarren der gewünschten Bereiche der ersten Schicht wird eine weitere Leichtmetallpulver-Schicht in aufgetragen. Diese wird ebenfalls gemäß dem darüber liegenden Querschnitt der CAD-Datei mittels der Wärmequelle geschmolzen. Dabei wird die vorhergehende bereits erstarrte Schicht ebenfalls teilweise aufgeschmolzen, so dass sich die benachbarten Schichten beim Erstarren stoffschlüssig verbinden.

Die oben beschriebenen Schritte können wiederholt werden, bis ein Trochoid-Rohbauteil gemäß der CAD-Datei fertiggestellt ist. Bei einer Trochoide mit 300 mm Bauteilstärke können die oben beschriebenen Schritte für ca. 6000 Schichten durchgeführt werden.

Als Wärmequelle kann dabei eine Elektronenstrahlvorrichtung, eine Lichtbogenvorrichtung oder ein Laser eingesetzt werden. Der Laser kann vorteilhaft ein Dauerstrich-Laser sein mit einer Leistung von bis zu z.B. 100 kW, beispielweise kann die Leistung 0,1 bis 5 kW sein. Der Laser kann jedoch auch ein Hochenergie-Kurzpulslaser (z.B. mit einer Impulslänge von << 1 Mikrosekunde), insbesondere ein Excimer Kurzpulslaser oder ein Festkörper-Kurzpulslaser (z.B. ein Nd-YAG Laser) sein. Dabei kann der Laser eine Energie pro Laserpuls von bis zu 100 Joule aufbringen. Eine Mittelenergie des Lasers kann bei 0,5 bis 10 Joule liegen. Die Laserstrahlen können mit Hilfe von Spiegelstrahlführung und/oder faseroptischer Strahlführung zur X-Y-Platte geleitet werden.

Gemäß einem Ausführungsbeispiel der Erfindung weist das Verfahren ferner Wärmebehandeln des Trochoid-Rohbauteils auf. Durch das Wärmebehandeln können fertigungsbedingte Eigenspannungen des Trochoid-Rohbauteils kontrolliert reduziert werden. Die Wärmebehandlung kann auch als Spannungsarmglühen bezeichnet werden und findet mit Hilfe einer Wärmequelle statt. Insbesondere kann die Wärmenachbehandlung nach der Fertigstellung des Trochoid-Rohbauteils und vor einem auf Endmaß-Bringen der Trochoiden stattfinden.

Durch das Wärmebehandeln kann zusätzlich die Mikrostruktur des Kristalls der Leichtmetalllegierung verändert bzw. verfeinert werden, so dass keine groben Eisenaluminide, beispielsweise größer als 0,1 µm, im übersättigten Kristall des Trochoid-Rohbauteils nach dem Erstarren auftreten.

Gemäß einem weiteren Ausführungsbeispiel der Erfindung weist das Verfahren ferner Nachbearbeiten des Trochoid-Rohbauteils auf, so dass dieses auf Endmass gebracht wird. Das Nachbearbeiten kann dabei eine mechanische und/oder chemische Nachbehandlung umfassen. Das Nachbearbeiten findet vorzugsweise nach der Wärmebehandlung statt, da sich die Abmessungen bzw. die Geometrie der Trochoide bei der Wärmebehandlung noch verändern können.

Gemäß einem weiteren Ausführungsbeispiel der Erfindung weist das Verfahren ferner eine Implementierung von Druckeigenspannungen auf. Die Implementierung bzw. das Induzieren von Druckeigenspannungen dient der zusätzlichen Verfestigung der Oberfläche der Trochoide und erhöht die Widerstandfähigkeit der Trochoide gegenüber Rissbildungen, Rissfortschritten oder Risswachstum.

Dabei können die Druckeigenspannungen mit Hilfe einer Bestrahlung mit einem Laser oder durch Kugelstrahlen stattfinden. Alternativ kann die Oberfläche der Trochoide festgehämmert oder festgewalzt werden. Vorzugsweise werden die Druckeigenspannungen durch so genanntes Laser Shock Peening (LSP) implementiert, da dieses Verfahren die vergleichsweise tiefste Eindringtiefe aufweist und das Ermüdungsverhalten der Trochoide erheblich verbessert. Die Implementierung von Druckeigenspannungen kann dabei nach dem auf Endmaß-Bringen stattfinden.

Weitere Merkmale und Vorteile der vorliegenden Erfindung werden dem Fachmann aus der nachfolgenden Beschreibung beispielhafter Ausführungsformen, die jedoch nicht als die Erfindung beschränkend auszulegen sind, unter Bezugnahme auf die beigelegten Zeichnungen ersichtlich.

### KURZE BESCHREIBUNG DER FIGUREN

Nachfolgend wird anhand der beigefügten Zeichnungen näher auf Ausführungsbeispiele der Erfindung eingegangen. Es zeigen:
- **Fig. 1**: einen Querschnitt durch eine Trochoide gemäß einem Ausführungsbeispiel der Erfindung
- **Fig. 2**: einen Querschnitt durch einen Rotationskolbenmotor gemäß einem Ausführungsbeispiel der Erfindung
- **Fig. 3**: ein schematisches Flussdiagram eines Verfahrens zum Herstellen einer Trochoide gemäß einem Ausführungsbeispiel der Erfindung

Alle Figuren sind lediglich schematische Darstellungen erfindungsgemäßer Vorrichtungen bzw. ihrer Bestandteile gemäß Ausführungsbeispielen der Erfindung. Insbesondere Abstände und Größenrelationen sind in den Figuren nicht maßstabsgetreu wiedergegeben. In den verschiedenen Figuren sind sich entsprechende Elemente mit den gleichen Referenznummern versehen.

### DETAILLIERTE BESCHREIBUNG VON AUSFÜHRUNGSBEISPIELEN

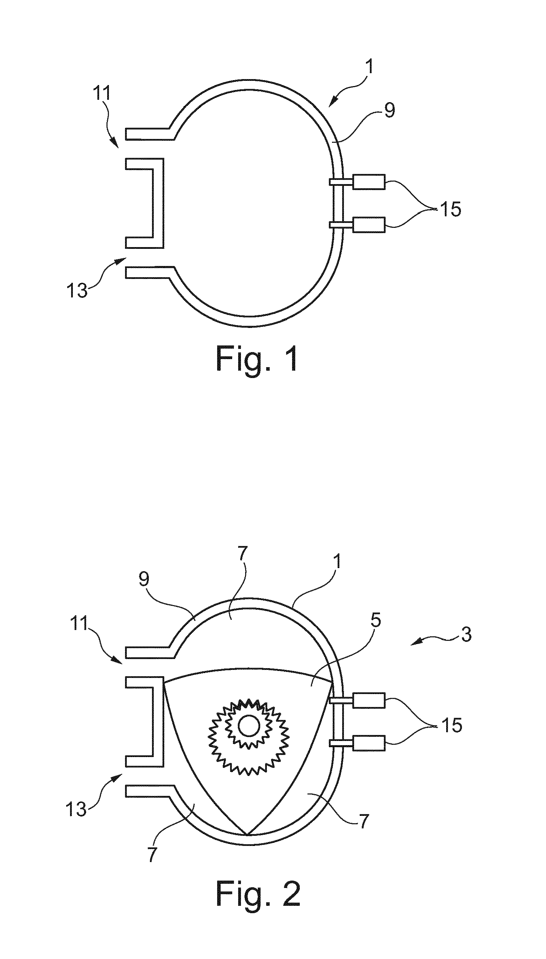

In Fig. 1 ist ein Querschnitt durch eine Trochoide 1 für einen Rotationskolbenmotor 3 dargestellt. Die Trochoide 1 und der entsprechende Rotationskolbenmotor 3 können zum Beispiel in einem Luftfahrzeug eingesetzt werden.

Die Trochoide 1 kann wie in Fig. 1 gezeigt, als oval-bogiges Gehäuse ausgeführt sein. Dabei können in der Trochoide 1 Öffnungen 11, 13 vorgesehen sein. Eine Einlassöffnung 11 ermöglicht ein Ansaugen eines Gas-Brennstoff-Gemisches in die Trochoide. Eine Auslassöffnung 13 ermöglicht ein Auslassen der Verbrennungsprodukte. Ferner können in der Trochoide 1 weitere Öffnungen vorgesehen sein, durch die Zündkerzen 15 mit einem Arbeitsraum 7 innerhalb der Trochoide 1 verbunden sind.

Die Trochoide 1 ist wie in Fig. 2 gezeigt ausgeführt, zusammen mit einem Läufer 5 Arbeitsräume 7 zum Komprimieren und Zünden eines Brennstoffs bereitzustellen. Bei bekannten Trochoiden können die erzielbaren Verdichtungs- und Verbrennungsdrücke u.a. aufgrund der Trochoiden-Geometrie relativ beschränkt sein.

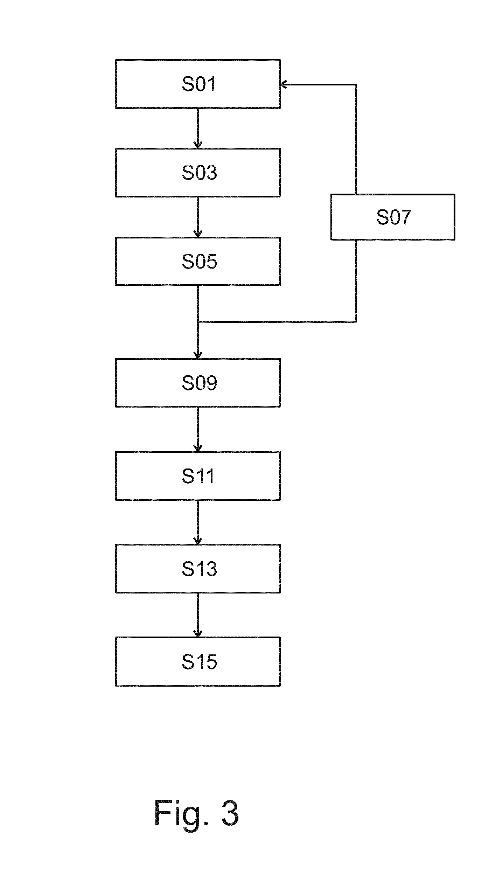

Die in Fig. 1 gezeigte Trochoide 1 weist eine Leichtmetalllegierung 9 auf und ist mittels eines generativen Verfahrens gefertigt. Hierdurch ist die Trochoide 1 einerseits relativ gewichtssparend ausgeführt. Andererseits können bei einer mittels generativen Verfahren hergestellten Trochoide 1 Zulegierungen integriert werden, so dass eine höhere Werkstoffbelastung und damit eine Erhöhung der Druckniveaus möglich ist. Anders ausgedrückt ermöglicht es die durch ein generatives Verfahren gefertigte Trochoide 1 höhere Kompressions- bzw. mittlere Verbrennungsdrücke zu realisieren. Auf diese Weise kann mit der Trochoide 1 der Wirkungsgrad eines Rotationskolbenmotors 3 erhöht bzw. der spezifische Verbrauch gesenkt werden. Ferner ist es durch die höheren Kompressionsdrücke möglich, in Verbindung mit hohen Einspritzdrücken, eine Selbstzündung von Diesel oder Kerosin im Rotationskolbenmotor 3 zu realisieren. Somit kann in diesem Fall auf die in der Regel notwendige Gas-Brennstoff-Gemisch-Zündung durch einen Funken verzichtet werden. Zur Steigerung der Steifigkeit der Trochoide 1 bzw. zur Erhöhung des Elastizitätsmoduls und damit der Druckfestigkeit der Trochoide 1 können im generativen Verfahren pulvermetallurgische Aluminium-Basiswerkstoffe mit Zulegierungen, wie Fe, Co, Ni, V, Nb, Ti, Zr, Hf, Ta, B, die Gruppe der Lanthanoiden (seltene Erden), insbesondere Sc oder Y, und/oder Si verwendet werden. Bei der pulvermetallurgischen Verarbeitung der Materialien mittels des generativen Verfahrens bleibt die Feinstruktur des Basispulvers erhalten. Das generative Verfahren wird in Zusammenhang mit Fig. 3 näher erläutert.

In Fig. 2 ist ein Querschnitt durch einen Rotationskolbenmotor 3 gezeigt. Der Rotationskolbenmotor 3 kann als Kreiskolbenmotor ausgeführt sein und mit Diesel oder Kerosin betrieben werden. Der Rotationskolbenmotor 3 weist einen Läufer 5 auf, der in der Trochoide 1 drehbar gelagert ist. Die Lagerung kann zum Beispiel mit Hilfe von Zahnrädern erfolgen. Der Läufer 5 bildet mit der Innenwand der Trochoide 1 Arbeitsräume 7 aus, in denen zum Beispiel in vier Takten eine Verbrennung des Brennstoffs stattfindet.

Der Rotationskolbenmotor 3 weist gegenüber einem Hubkolbenmotor wichtige Vorteile auf. Bei Verwendung des Rotationskolbenmotors 3 kann eine Vibration bei Betrieb des Motors minimiert werden. Ferner kann der Rotationskolbenmotor 3 ein gutes Leistungsgewicht bereitstellen. Somit ist die Verwendung des Rotationskolbenmotors 3, insbesondere im Luftfahrtbereich, vorteilhaft. Der Rotationskolbenmotor 3 kann für einen Antrieb oder als Turbinenersatz in Flugzeugen eingesetzt werden.

In Fig. 3 ist ein schematisches Flussdiagram eines Verfahrens zum Herstellen einer Trochoide 1 dargestellt. Das Verfahren ist dabei ein generatives Verfahren, welches Laser-gestützt, Elektronenstrahl-gestützt oder Lichtbogen-gestützt ist.

In einem ersten Schritt S01 wird eine Schicht eines Leichtmetallpulvers 9 auf einer X-Y-Platte aufgetragen bzw. bereitgestellt. Anschließend wird in einem weiteren Schritt S03 das Leichtmetallpulver in vorgegebenen Bereichen mittels einer Wärmequelle geschmolzen. Die Vorgabe der zu schmelzenden Bereiche kann zum Beispiel mit Hilfe einer CAD-Datei erfolgen, in der die Trochoid-Geometrie gespeichert ist.

In einem Schritt S05 wird das Leichtmetallpulver 9 ausgekühlt und erstarrt. Die Schritte S01 bis S05 werden wiederholt bis ausreichend Leichtmetallschichten an den vorgegebenen Stellen stoffschlüssig miteinander verbunden sind. Dies ist mit Schritt S07 bezeichnet. Nach ausreichender Wiederholung der Schritte S01 bis S05 kann in Schritt S09 ein Trochoid-Rohbauteil fertiggestellt werden.

In einem Schritt S11 wird das Trochoid-Rohbauteil Wärme-behandelt. Durch die Wärmebehandlung können Eigenspannungen des Trochoid-Rohbauteils kontrolliert reduziert werden. In einem Schritt S13 erfolgt ein mechanisches und/oder chemisches Nachbearbeiten des Trochoid-Rohbauteils. Dadurch wird das Trochoid-Rohbauteil auf Endmass gebracht. Anschließend kann in Schritt S15 eine Induzierung von Druckeigenspannungen der Trochoide 1 stattfinden. Die Induzierung von Druckeigenspannungen kann dabei zum Beispiel durch Laser Shock Peening erfolgen und das Ermüdungsverhalten der Trochoide 1 erheblich verbessern.

Das Verfahren kann weitere hier nicht aufgeführte Schritte aufweisen. Ferner können die einzelnen Verfahrensschritte in einer alternativen Reihenfolge durchgeführt werden.

Abschließend wird angemerkt, dass Ausdrücke wie "aufweisend" oder ähnliche nicht ausschließen sollen, dass weitere Elemente oder Schritte vorgesehen sein können. Des Weiteren sei darauf hingewiesen, dass "eine" oder "ein" keine Vielzahl ausschließen. Außerdem können in Verbindung mit den verschiedenen Ausführungsformen beschriebene Merkmale beliebig miteinander kombiniert werden. Es wird ferner angemerkt, dass die Bezugszeichen in den Ansprüchen nicht als den Umfang der Ansprüche beschränkend ausgelegt werden sollen.

### Bezugszeichenliste

- 1: Trochoide
- 3: Rotationskolbenmotor
- 5: Läufer
- 7: Arbeitsraum
- 9: Leichtmetalllegierung
- 11: Einlassöffnung
- 13: Auslassöffnung
- 15: Zündkerze

- S01: Bereitstellen einer Schicht eines Leichtmetallpulvers
- S03: Schmelzen des Leichtmetallpulvers mittels einer Wärmequelle
- S05: Erstarren des Leichtmetallpulvers
- S07: Wiederholen der oben genannten Schritte
- S09: Fertigstellen eines Trochoid-Rohbauteils
- S11: Wärmebehandeln des Trochoid-Rohbauteils, so dass Eigenspannungen des Trochoid-Rohbauteils kontrolliert reduziert werden
- S13: mechanisches und/oder chemisches Nachbearbeiten des Trochoid-Rohbauteils, so dass dieses auf Endmass gebracht wird
- S15: Implementierung von Druckeigenspannungen in der Trochoide

## Patentansprüche

1. Trochoide (1) für einen Rotationskolbenmotor (3),
wobei die Trochoide (1) ausgeführt ist, zusammen mit einem Läufer (5) Arbeitsräume (7) zum Komprimieren und Zünden eines Brennstoffs bereitzustellen;
wobei die Trochoide (1) eine Leichtmetalllegierung (9) aufweist,
wobei die Trochoide (1) mittels eines generativen Verfahrens gefertigt ist.

2. Trochoide (1) gemäß Anspruch 1,
wobei die Leichtmetalllegierung (9) eine Aluminiumlegierung oder eine Titanlegierung ist.

3. Trochoide (1) gemäß einem der Ansprüche 1 und 2,
wobei die Leichtmetalllegierung (9) eine Zulegierung aufweist, die ein Elastizitätsmodul der Leichtmetalllegierung (9) erhöht;
wobei die Zulegierung ausgewählt ist aus der folgenden Gruppe von Zulegierungen: Eisen, Cobalt, Nickel, Vanadium, Mangan, Niob, Titan, Zirkon, Hafnium, Tantal, Bor, die Gruppe der Lanthanoiden, insbesondere Scandium oder Yttrium, und/oder Silizium.

4. Trochoide (1) gemäß einem der Ansprüche 1 bis 3,
wobei die Leichtmetalllegierung (9) eine Aluminium-Eisen-Mangan-Legierung ist.

5. Trochoide (1) gemäß Anspruch 4,
wobei die Leichtmetalllegierung (9) zwischen 1,5 und 10 Gew.-% Eisen aufweist;
wobei die Leichtmetalllegierung (9) zwischen 0,5 und 2 Gew.-% Mangan aufweist.

6. Rotationskolbenmotor (3) für Luftfahrzeuge, der Rotationskolbenmotor (3) aufweisend
eine Trochoide (1) gemäß einem der Ansprüche 1 bis 5,
einen Läufer (5), der in der Trochoide (1) drehbar gelagert ist.

7. Luftfahrzeug, das Luftfahrzeug aufweisend einen Rotationskolbenmotor (3) gemäß Anspruch 6.

8. Verfahren zum Herstellen einer Trochoide (1) gemäß einem der Ansprüche 1 bis 5, das Verfahren aufweisend die folgenden Schritte
Bereitstellen (S01) einer Schicht eines Leichtmetallpulvers;
Schmelzen (S03) des Leichtmetallpulvers mittels einer Wärmequelle entsprechend einer Trochoid-Geometrie;
Erstarren (S05) des Leichtmetallpulvers;
Wiederholen (S07) der oben genannten Schritte für mehrere Schichten bis ein Trochoid-Rohbauteil fertiggestellt (S09) ist.

9. Verfahren gemäß Anspruch 8, ferner aufweisend
Wärmebehandeln (S11) des Trochoid-Rohbauteils, so dass Eigenspannungen des Trochoid-Rohbauteils kontrolliert reduziert werden.

10. Verfahren gemäß einem der Ansprüche 8 und 9, ferner aufweisend Nachbearbeiten (S13) des Trochoid-Rohbauteils, so dass dieses auf Endmass gebracht wird.

11. Verfahren gemäß einem der Ansprüche 8 bis 10, ferner aufweisend Implementierung von Druckeigenspannungen (S15) in der Trochoide (1).
